# EUROPÄISCHE PATENTSCHRIFT

(11) **EP 3 835 723 B1**
(45) Veröffentlichungstag und Bekanntmachung des Hinweises auf die Patenterteilung: **03.04.2024**
(21) Anmeldenummer: 20213567.9
(22) Anmeldetag: 11.12.2020
(51) Int. Cl.: G01C 15/00, G01S 7/481, G01S 17/08, G02B 27/10, G02B 23/04, G02B 5/00

(54) **EINSPIEGELUNGSVORRICHTUNG**
MIRRORING DEVICE
DISPOSITIF DE PROJECTION PAR RÉFLEXION

(30) Priorität: 13.12.2019 EP 19216182
(43) Veröffentlichungstag der Anmeldung: 16.06.2021
(73) Patentinhaber: Leica Geosystems AG, 9435 Heerbrugg (CH)
(72) Erfinder: BÖSCH, Thomas, 6890 Lustenau (AT); MÜLLER, Josef, 9413 Oberegg (CH)
(74) Vertreter: Kaminski Harmann

(56) Entgegenhaltungen:
- EP-A1- 2 405 236
- EP-A2- 2 929 280
- ANDREW LYNCH ET AL: "Beam manipulation: prisms vs. mirrors", PHOTONIK INTERNATIONAL, vol. 2009, no. 2, 12 November 2009 (2009-11-12), pages 45-47, XP055157575,

## Beschreibung

Die Erfindung betrifft eine Vorrichtung zur Einspiegelung eines Messlichtstrahls nach Anspruch 1.

Zum Vermessen von Zielpunkten sind seit der Antike zahlreiche Vermessungsgeräte bekannt. Als räumliche Standarddaten werden dabei Entfernung und Richtung bzw. Winkel von einem Messgerät zum zu vermessenden Zielpunkt aufgenommen sowie insbesondere die absolute Position des Messgerätes nebst eventuell vorhandenen Bezugspunkten erfasst. Typische Zielpunkte sind dabei Kirchtürme, Messlatten, Retroreflektoren oder markante Punkte in Innenräumen.

Allgemein bekannte Beispiele für solche Vermessungsgeräte stellen Theodolit, Tachymeter und Totalstation (die auch als elektronischer Tachymeter oder Computer-Tachymeter bezeichnet wird) dar. Beispielsweise ist eine geodätische Messvorrichtung des Standes der Technik in der Veröffentlichungsschrift EP 1 686 350 A1 beschrieben, wobei das geodätische Vermessungsgerät hier nur als Beispiel dient. Derartige Geräte verfügen über elektrosensorische Winkel- und Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äußeren Bezugssystem verknüpft werden.

Moderne Totalstationen verfügen über Mikroprozessoren zur digitalen Weiterverarbeitung und Speicherung erfasster Messdaten. Die Geräte weisen in der Regel eine kompakte und integrierte Bauweise auf, wobei meist koaxiale Distanzmesselemente sowie Rechen-, Steuer- und Speichereinheiten in einem Gerät vorhanden sind. Abhängig von der Ausbaustufe der Totalstation können zudem eine Motorisierung der Anziel- bzw. Visiereinrichtung sowie Mittel zur automatischen Zielsuche und -verfolgung integriert sein. Als Mensch-Maschine-Schnittstelle kann die Totalstation eine elektronische Anzeige-Steuereinheit - im Allgemeinen eine Mikroprozessor-Recheneinheit mit elektronischen Datenspeichermitteln - mit Display und Eingabemitteln, z. B. einer Tastatur, aufweisen. Der Anzeige-Steuereinheit werden die elektrosensorisch erfassten Messdaten zugeführt, sodass die Position des Zielpunkts durch die Anzeige-Steuereinheit ermittelbar, optisch anzeigbar und speicherbar ist. Aus dem Stand der Technik bekannte Totalstationen können weiterhin über eine Funkdatenschnittstelle verfügen zum Aufbau einer Funkverbindung zu externen Peripheriekomponenten wie z. B. zu einem handhaltbaren Datenerfassungsgerät, welches insbesondere als Datenlogger oder Feldrechner ausgebildet sein kann.

Zum Anvisieren bzw. Anzielen des zu vermessenden Zielpunkts weisen gattungsgemässe Vermessungsgeräte ein Zielfernrohr, wie z. B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z. B. des Datenloggers - dargestellt werden kann. Die Optik der Visiereinrichtung kann dabei einen manuellen Fokus - beispielsweise eine Stellschraube zur Veränderung der Position einer Fokussieroptik - aufweisen oder über einen Autofokus verfügen, wobei das Verändern der Fokusposition z. B. durch Servomotoren erfolgt. Automatische Fokussiereinrichtungen für Zielfernrohre beispielsweise geodätischer Geräte sind z. B. aus den Dokumenten DE 19710722, DE 19926706 oder DE 19949580 bekannt. ß

EP 2 405 236 A1 offenbart ein Vermessungsgerät mit einer automatischen Zielpunkt-Anzielfunktionalität, einer Meßstrahlungsquelle und einem optischen Umlenkelement.

EP 2 929 280 B1 offenbart die Einbettung eines Laserentfernungsmeßgerätes in das Zielfernrohr eines Gewehrs.

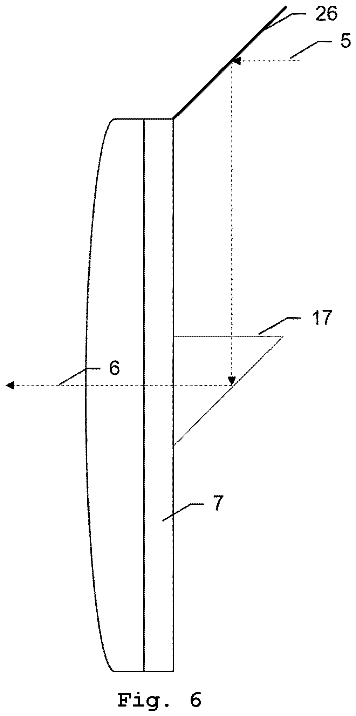

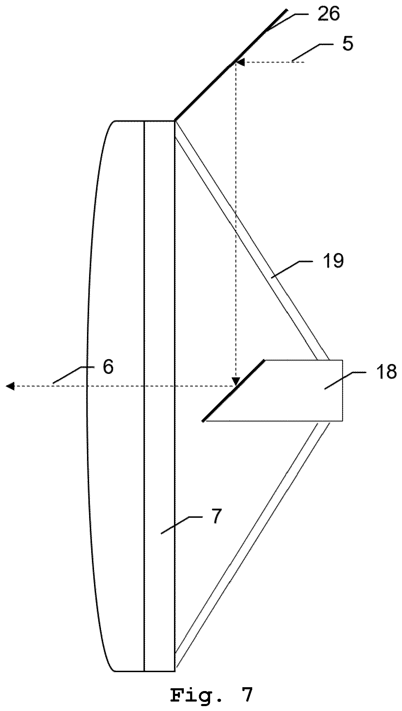

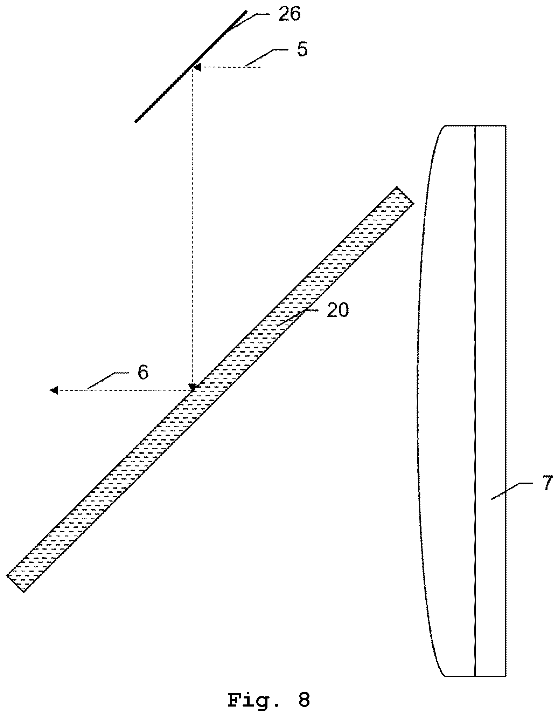

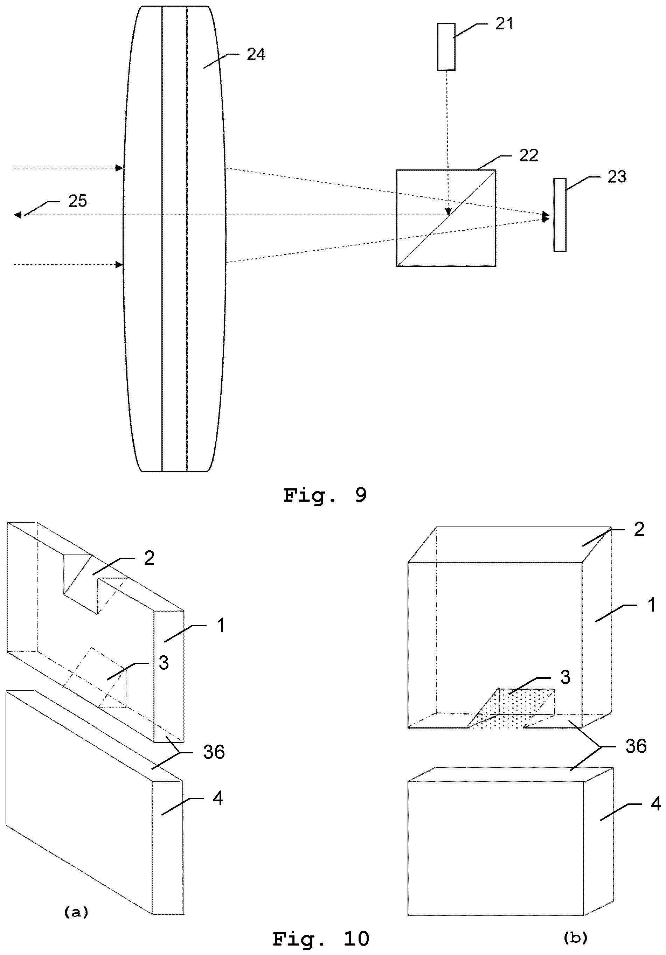

Die präzise opto-elektronische Vermessung eines entfernten Objekts bedarf häufig einer zusätzlichen Beleuchtungsquelle, die einen Messlichtstrahl erzeugt, mit dem das zu vermessende Objekt beleuchtet wird. Idealerweise ist der das zu vermessende Objekt beleuchtende Messlichtstrahl dabei kollinear zur optischen Achse des z.B. im Messteleskop verwendeten Objektivs, um die Entstehung von Parallaxen zu minimieren. Um eine möglichst optimale Ausnutzung z.B. eines Messteleskops zu erzielen, wird dann im Regelfall gefordert, dass die Einspiegelungsvorrichtung um die optische Achse der lichtbrechenden Komponenten des optischen Systems herum positioniert ist, so dass der eingespiegelte Messlichtstrahl auf der optischen Achse liegt. Kollineare Lösungen nach dem Stand der Technik werden in den Figuren 6-9 aufgezeigt. Ein Nachteil der in Figur 6 skizzierten Lösung ist dabei die fehlende mechanische Stabilität der Anordnung im Schockfall, sowie ein auftretender Zentrumsschatten in einem Bildsensor, welcher hinter der in Figur 6 gezeigten Anordnung positioniert wird. Ein solcher Zentrumsschatten verhindert dann die Vermessung eines Objekts, welches sich im Nahfeld des optischen Systems befindet. Die in Figur 7 gezeigte Lösung nach dem Stand der Technik weist ähnliche Nachteile wie die in Figur 6 dargestellte Lösung auf. Zuzüglich ist die Lösung auch empfindlich in Hinblick auf thermische Instabilitäten. Eine weitere Lösungsmöglichkeit nach dem Stand der Technik ist in Figur 8 dargestellt. Eine Teilerplatte wird zwecks Einspiegelung vor dem Objektiv z.B. eines Messteleskops positioniert. Nachteile dieser Lösung sind wiederum die fehlende Stabilität bei Temperaturänderungen sowie mechanische Instabilität. Weiterhin ist die in Figur 8 präsentierte Lösung nicht platzsparend und führt darüber hinaus zu einer vollständigen Intensitätseinbusse über die gesamte Eintrittspupille hinweg. Eine weitere Lösung nach dem Stand der Technik ist in Figur 9 dargestellt. Der prinzipielle Nachteil dieser Vorrichtung besteht darin, dass Mehrfachreflexe im Hauptobjektiv auftreten können.

Neben den hier erwähnten kollinearen Lösungen ist auch eine nichtkollineare Anordnung denkbar, bei der der Messstrahl, welcher das Messobjekt beleuchtet, nicht parallel zur optischen Achse des Objektivs z.B. eines Messteleskops ist. Nichtkollineare Beleuchtungen des Messpunkts führen im Allgemeinen zur Entstehung von Parallaxen, welche dann korrigiert werden müssen.

Die Aufgabe, eine verbesserte Einspiegelungsvorrichtung bereitzustellen, wird durch die Verwirklichung der kennzeichnenden Merkmale des unabhängigen Anspruchs gelöst. Merkmale, die die Erfindung in alternativer oder vorteilhafter Weise weiterbilden, sind den abhängigen Patentansprüchen zu entnehmen.

Die Erfindung betrifft eine Vorrichtung zur Einspiegelung eines auf ein Zielobjekt projizierbaren Messlichtstrahls nach Anspruch 1.

Der optische Gesamtkörper bildet zusammen mit den mindestens zwei Spiegeln eine starre Einheit. Insbesondere sind der optische Gesamtkörper und die mindestens zwei Spiegel mechanisch fest verbunden. Ein am Rande des optischen Gesamtkörpers angebrachter Spiegel kann insbesondere auf einer Randfläche des optischen Gesamtkörpers angebracht sein. In einer Ausführungsform wird ein erster der mindestens zwei Spiegel von der optischen Achse geschnitten. Der erste Spiegel, auf die Ebene orthogonal zur optischen Achse projiziert, weist eine Spiegelausdehnung auf, und der optische Gesamtkörper, auf die Ebene orthogonal zur optischen Achse projiziert, weist eine Gesamtausdehnung auf. Das Verhältnis von Spiegelausdehnung zur Gesamtausdehnung ist kleiner als 0.5, und insbesondere kleiner als 0.3, und vorteilhafterweise kleiner als 0.1.

Der erste Spiegel kann daher in einer Ebene, die orthogonal zur optischen Achse liegt, weniger stark ausgedehnt sein als der optische Gesamtkörper.

In einer Ausführungsform durchquert der ganze Strahlgang der lichtbrechenden Komponente den optischen Gesamtkörper, und/oder die Gesamtausdehnung ist mindestens so gross ist wie eine Objektivausdehnung, wobei die lichtbrechende Komponente, auf eine Ebene orthogonal zur optischen Achse projiziert, die Objektivausdehnung aufweist.

Der durch die lichtbrechende Komponente gehende Strahlgang durchquert in einer Ausführungsform den optischen Gesamtkörper vollständig. Der Strahlgang wird daher vollständig vom optischen Gesamtkörper erfasst. Die durch die lichtbrechende Komponente gebrochenen Lichtstrahlen passieren daher den optischen Gesamtkörper.

Die Gesamtausdehnung ist daher vorzugsweise so gross wie die Objektivausdehnung, wodurch der optische Gesamtkörper den gesamten Strahlgang vorzugsweise im gleichen Masse verändern kann. Der optische Gesamtkörper und die lichtbrechende Komponente erstrecken sich räumlich auch in eine Orthogonalrichtung, welche orthogonal zur optischen Achse und zur Richtung der Gesamtausdehnung bzw. der Objektivausdehnung ist. Vorzugsweise ist der optische Gesamtkörper auch in Orthogonalrichtung mindestens so gross wie die lichtbrechende Komponente. Der erste Spiegel kann in Orthogonalrichtung eine geringere Ausdehnung als der optische Gesamtkörper aufweisen. Durch eine solche geringere Ausdehnung des ersten Spiegels kann eine durch den ersten Spiegel erzeugte Teilabschattung auf einen zentralen Bereich beschränkt werden.

In einer Ausführungsform liegt der optische Gesamtkörper als Verbund aus mindestens zwei optischen Körpern oder als Verbund aus mindestens einem optischen Körper und mindestens einem optischen Teilkörper vor, wobei die zwei der mindestens zwei Spiegel nur an den Randflächen von mindestens einem der optischen Körper angebracht sind. Die Spiegel sind an optischen Körpern angebracht, und nicht an optischen Teilkörpern.

In einer Ausführungsform sind die mindestens zwei optischen Körper oder der mindestens eine optische Körper und der mindestens eine optische Teilkörper an einer Kittfläche miteinander verbunden, wobei die Kittfläche parallel zur optischen Achse ist.

Eine im Wesentlichen parallel zur optischen Achse verlaufende Kittfläche kann mögliche Keilfehler minimieren, wobei Keilfehler zu einer unerwünschten Strahlablenkung, die zu Doppelbildern führen kann, beitragen können. Abweichungen von 5° bis 10° von einer Parallelität können auch eine Verminderung von Keilfehlern bewirken. Solche Doppelbilder können in einem Verbundbereich entstehen, z.B. an und um Verbundflächen zwischen zwei optischen Körpern bzw. zwischen einem optischen Körper und einem optischen Teilkörper. Die Kittfläche kann in einer Ebene liegen, wobei es diese Ebene ist, die parallel zur optischen Achse sein kann. Zur Minimierung von Keilfehlern können daher Kittflächen, bzw. die Ebenen, in denen die Kittflächen liegen können, parallel zur optischen Achse sein. In einer Ausführungsform ist der optische Gesamtkörper aus genau einem optischen Körper und genau einem optischen Teilkörper zusammengesetzt.

In einer Ausführungsform ist der optische Körper, welchen der optische Gesamtkörper aufweist, in planparalleler und prismatischer Form ausgeführt, und der optische Teilkörper liegt ebenfalls in planparalleler und prismatischer Form vor.

In einer Ausführungsform ist mindestens einer der mindestens zwei Spiegel als Teilerschicht verwirklicht, so dass im Zentrum eines Distanzsensors zur Detektion des vom Zielobjekt reflektierten Messlichtstrahls, der orthogonal zur optischen Achse der lichtbrechenden Komponente positioniert ist und dessen Sensormittelpunkt von der optischen Achse geschnitten wird, lediglich eine Teilabschattung vorliegt.

In einer Ausführungsform weist der optische Gesamtkörper die lichtbrechende Komponente auf, so dass sowohl der Messlichtstrahlversatz als auch eine optische Abbildung vom optischen Gesamtkörper durchgeführt werden.

In einer Ausführungsform wird die Teilerschicht so eingestellt, dass Nahfeldmessungen ermöglicht werden, insbesondere durch ein dichroitisches Filter als Teilerschicht.

In einer Ausführungsform wird die Teilerschicht so eingestellt, dass sie selektiv einen Teiler für die Wellenlänge der verwendeten Messlichtquelle, insbesondere für eine Laserquelle im nahen Infrarotbereich, darstellt, und für andere Wellenlängen durchlässig ist.

In einer Ausführungsform ist die lichtbrechende Komponente als diffraktives optisches Element ausgebildet, insbesondere zum Beispiel als Kompositreplikat auf Glas.

In einer Ausführungsform bilden zwei parallele Oberflächen, an denen zwei der mindestens zwei Spiegel angebracht sind, von dem mindestens einen ersten optischen Körper einen gleichen Winkel zur Einfallsrichtung des Messlichtstrahls, wobei der Winkel insbesondere 43 Grad beträgt.

Der Winkel kann auch einen Wert im Bereich von 41 bis 45 Grad aufweisen.

Der Winkel zwischen den zwei der mindestens zwei Spiegeln und der Einfallsrichtung des Messlichtstrahls kann von der Orientierung des ersten optischen Körpers abhängen.

In einer Ausführungsform sind sowohl der optische Körper als auch der optische Teilkörper als Glaskörper ausgeführt, und/oder als Kunststoffkörper, insbesondere aus Polycarbonat oder Polymethylmethacrylat oder einem Cycloolefin-Copolymer oder einem Cycloolefin-Polymer bestehend, und/oder als Keramikkörper, insbesondere aus Saphir oder Alon bestehend.

Die Erfindung betrifft weiterhin ein Koordinatenmessgerät, welches eine Vorrichtung nach Anspruch 1 aufweist, die zur Einspiegelung eines Messlichtstrahls verwendet werden kann.

Die Erfindung betrifft weiterhin ein Koordinatenmessgerät, welches eine Vorrichtung nach Anspruch 7 aufweist, so dass mit Hilfe des Koordinatenmessgeräts Vermessungen im Nahfeldbereich durchgeführt werden können.

Die Erfindung betrifft weiterhin ein Koordinatenmessgerät, wobei das Koordinatenmessgerät als Theodolit, Tachymeter oder Totalstation ausgeführt ist.

Die erfindungsgemässe Vorrichtung wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine Ausführungsform einer erfindungsgemässen Vorrichtung zur Einspiegelung eines Messlichtstrahls;
- Fig. 2: eine Ausführungsform einer erfindungsgemässen Vorrichtung zur Einspiegelung eines Messlichtstrahls, eine separate lichtbrechende Komponente aufweisend;
- Fig. 3: eine Ausführungsform einer erfindungsgemässen Vorrichtung zur Einspiegelung eines Messlichtstrahls, wobei die erfindungsgemässe Vorrichtung in einem Messteleskop angebracht ist;
- Fig. 4: eine Ausführungsform entsprechend Fig. 3, wobei die Anordnung von vorne betrachtet wird;
- Fig. 5: weitere Ausführungsformen einer erfindungsgemässen Vorrichtung zur Einspiegelung eines Messlichtstrahls;
- Fig. 6: Ausführungsform zur Einspiegelung eines Messlichtstrahls nach dem Stand der Technik, ein auf einer lichtbrechenden Komponente angebrachtes Prisma zur Einspiegelung verwendend;
- Fig. 7: Ausführungsform zur Einspiegelung eines Messlichtstrahls nach dem Stand der Technik, einen mechanisch an einer lichtbrechenden Komponente befestigten Strahlenträger zur Einspiegelung verwendend;
- Fig. 8: Ausführungsform zur Einspiegelung eines Messlichtstrahls nach dem Stand der Technik, eine vor einer lichtbrechenden Komponente angeordnete Teilerplatte zur Einspiegelung verwendend;
- Fig. 9: Ausführungsform zur Einspiegelung eines Messlichtstrahls nach dem Stand der Technik, einen Teilerwürfel zur Einspiegelung verwendend;
- Fig. 10: zwei Ausführungsformen einer erfindungsgemässen Vorrichtung zur Einspiegelung eines Messlichtstrahls;
- Fig. 11: eine Ausführungsform einer erfindungsgemässen Vorrichtung zur Einspiegelung eines Messlichtstrahls;
- Fig. 12: eine Ausführungsform einer erfindungsgemässen Vorrichtung zur Einspiegelung eines Messlichtstrahls;
- Fig. 13: eine Ausführungsform einer erfindungsgemässen Vorrichtung zur Einspiegelung eines Messlichtstrahls;
- Fig. 14: eine Ausführungsform einer erfindungsgemässen Vorrichtung zur Einspiegelung eines Messlichtstrahls;
- Fig. 15: eine Ausführungsform einer erfindungsgemässen Vorrichtung zur Einspiegelung eines Messlichtstrahls;
- Fig. 16: eine Ausführungsform einer erfindungsgemässen Vorrichtung zur Einspiegelung eines Messlichtstrahls.

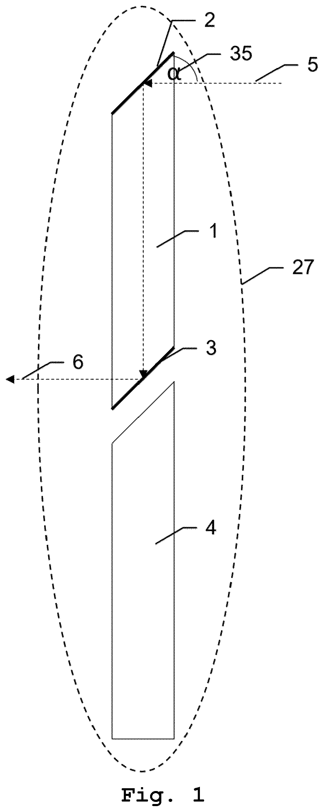

Figur 1 zeigt eine erste Ausführungsform einer erfindungsgemässen Vorrichtung zur Einspiegelung eines Messlichtstrahls in Form eines optischen Gesamtkörpers 27 aufweisend einen optischen Körper 1 und einen optischen Teilkörper 4. Die Ausführungsform weist einen planparallelen, prismatischen optischen Körper 1 auf, der mit einem Primärspiegel 2 und einem Sekundärspiegel 3 versehen ist. Ein einfallender Messlichtstrahl 5 wird durch die beiden Spiegel so umgelenkt, dass er parallel versetzt zum einfallenden Messlichtstrahl als ausfallender Messlichtstrahl 6 den optischen Körper verlässt. Die beiden Spiegel weisen einen gleichen Winkel α 35 zum ein- und ausfallenden Messlichtstrahl auf, der z.B. 43 Grad betragen kann. Ein optischer Teilkörper 4 ist so geformt, dass er mit dem optischen Körper 1 verbunden werden kann. Als mögliche Verbindungsmethode kann eine Verkittung gewählt werden. Im Regelfall ist der Brechungsindex des optischen Körpers 1 und des optischen Teilkörpers 4 im Wesentlichen übereinstimmend, so dass am Übergang zwischen dem optischen Körper 1 und dem optischen Teilkörper 4 keine oder nur eine sehr schwache Lichtbrechung auftritt. Beispielhaft sind die beiden Spiegel für den sichtbaren und nahen Infrarotbereich vorgesehen.

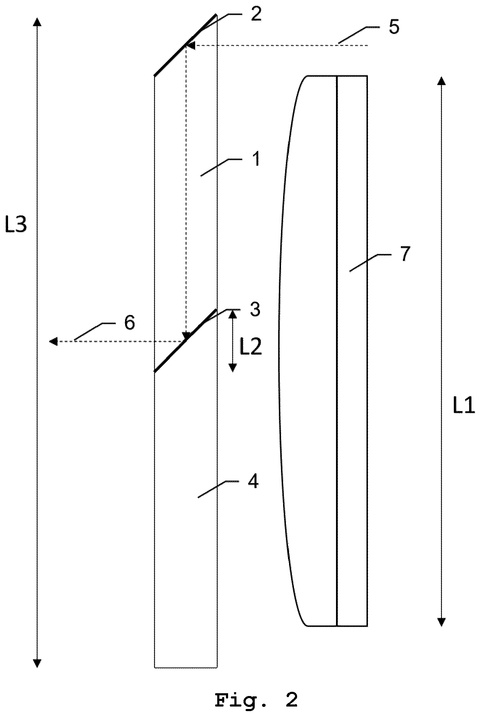

In Figur 2 ist neben dem optischen Gesamtkörper, der den optischen Körper 1 und den optischen Teilkörper 4 aufweist, und der nach der zu Figur 1 gegebenen Beschreibung aufgebaut ist, eine lichtbrechende Komponente 7 positioniert, welche hinter dem optischen Gesamtkörper angeordnet ist. Die lichtbrechende Komponente dient dabei als Objektiv z.B. eines Messteleskops und kann beliebig geformt sein. Die lichtbrechende Komponente 7 weist eine optische Achse auf. Senkrecht zur optischen Achse, d.h. auf eine zur optischen Achse senkrechte Ebene projiziert, weist die lichtbrechende Komponente 7 eine Objektivausdehnung L1 auf. Der optische Gesamtkörper wiederum weist, auf dieselbe Ebene projiziert, eine Gesamtausdehnung L3 auf. Die Gesamtausdehnung kann so eingestellt sein, dass der durch die lichtbrechende Komponente 7 gehende Strahlgang vollständig durch den optischen Gesamtkörper geht. Insbesondere kann L3 grösser als L1 sein. Der im optischen Gesamtkörper positionierte Primärspiegel 3 weist - auf dieselbe Ebene projiziert - eine Spiegelausdehnung L2 auf. Die Spiegelausdehnung L2 ist kleiner als die Gesamtausdehnung L3.

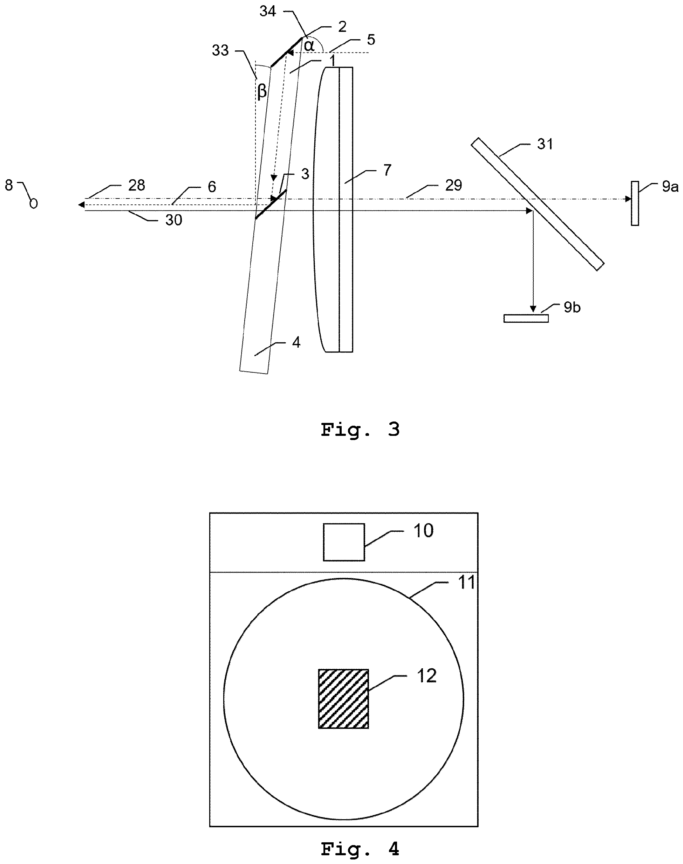

Figur 3 bettet die Anordnung nach Figur 2 in ein Messteleskop ein, wobei zusätzlich zu Figur 2 ein Messpunkt 8, ein Bildsensor 9b, ein Distanzsensor 9a, der insbesondere als APD oder SPAD Array ausgeführt ist, und eine wellenlängenabhängig-teiltransparente Teilerplatte 31 in Figur 3 enthalten sind. Der optische Gesamtkörper aus Figur 2 ist um einen Winkel β 33 gekippt, der insbesondere 2 Grad betragen kann. Die beiden Spiegel weisen einen gleichen Winkel α 34 zum ein- und ausfallenden Messlichtstrahl auf, wobei der Winkel α 34 insbesondere 43 Grad betragen kann. Die Winkel α 34 und β 33 sind über einen weiten Bereich einstellbar. Ein Kippen des optischen Gesamtkörpers aus Figur 2 um einen Winkel β 33 kann zur Vermeidung von ungewollten Reflexen in Richtung der lichtbrechenden Komponente 7 dienen. Die Anordnung ist weiterhin robust in Hinblick auf Fertigungsungenauigkeiten, da Schwankungen in α 34 und β 33 keinen wesentlichen Einfluss auf den Einspiegelungsvorgang haben. Das Messteleskop kann Bestandteil eines Koordinatenmessgeräts sein. Der ausfallende Messlichtstrahl 6, welcher in Richtung eines Messpunktes 8 zeigt, wird von diesem reflektiert. Die reflektierten Lichtstrahlen 28 des Messlichtstrahls werden sodann teilweise durch den Sekundärspiegel 3, der als Teilerschicht für die Wellenlänge des Messlichtstrahls, welche im nahen Infrarotbereich liegt, ausgebildet ist und für mit dem menschlichen Auge sichtbares Licht durchlässig ist, durchgelassen, woraufhin der reflektierte Messlichtstrahl 29, welcher durch den Sekundärspiegel 3 abgeschwächt ist, die wellenlängenabhängig-teiltransparente Teilerplatte 31 transmittiert und von einem Distanzsensor 9a, der insbesondere als Avalanche-Photodiode ausgeführt ist und zur Distanzmessung vorgesehen ist, erfasst wird. Vom Messpunkt 8 ausgehendes Licht 30 im vom menschlichen Auge sichtbaren Wellenlängenbereich wird vollständig vom Sekundärspiegel 3 durchgelassen und daraufhin von der wellenlängenabhängig-teiltransparenten Teilerplatte 31 auf einem Bildsensor 9b umgeleitet. Der Distanzsensor 9a und der Bildsensor 9b stellen damit eine Schnittstelle zu einer weitergehenden elektronischen Verarbeitung der erfassten Bilder dar.

Ein Vorteil der in Figur 3 gezeigten Anordnung ist die mechanische und thermische Stabilität der Einspiegelungsvorrichtung. Mechanische Stabilität wird insbesondere dadurch erreicht, dass die beiden zur Umlenkung eingesetzten Spiegel zwischen oder auf massivem Glas oder anderem optisch wirksamen Material eingebettet sind, so dass die Vorrichtung robust gegenüber einem mechanischen Schock ist. Da alle Materialien darüber hinaus ähnliches Verhalten bei thermischen Veränderungen aufweisen können, kann die Empfindlichkeit der Einspiegelungsvorrichtung auf solche Änderungen minimiert werden. Die kompakte Bauweise der Einspiegelungsvorrichtung minimiert auch die Anzahl Flächen, die verschmutzt werden können. Schliesslich führt die in Figur 3 gezeigte Einspiegelungsvorrichtung auch nicht zur Entstehung von Parallaxen, da der ausfallende Messlichtstrahl 6 kollinear zur optischen Achse der lichtbrechenden Komponente 7 ist. Kleine translatorische Bewegungen der Einspiegelungsvorrichtung entlang der optischen Achse der lichtbrechenden Komponente 7 und orthogonal zu ebendieser Achse sowie kleine Rotationsbewegungen um ebendiese Achse haben keinen Einfluss auf den ausfallenden Messlichtstrahl 6.

Figur 4 betrachtet die Anordnung aus Figur 3 von vorne, d.h. vom Messpunkt 8 aus Richtung Distanzsensor 9a schauend. Figur 4 zeigt dabei den Ort des einfallenden Messlichtstrahls 10, die Eintrittspupille 11 des Messlichtstrahls nach Reflexion am Messpunkt 8 und den Bereich im Distanzsensor 9a, in dem Teilabschattung 12 vorliegt. Damit lediglich eine Teilabschattung für die in Figur 3 dargestellte Anordnung vorliegt, kann insbesondere der untere Spiegel 3 im optischen Körper 1 als Teilerschicht verwirklicht werden. Der untere Spiegel 3 kann beispielsweise eine Teilerschicht für Wellenlängen im nahen Infrarotbereich ausbilden und voll durchlässig für andere Wellenlängen sein. Mit Hilfe einer Verwirklichung des unteren Spiegels 3 als Teilerschicht ist es möglich, mit dem in Figur 3 gezeigten Messteleskop Nahfeldmessungen durchzuführen, da nun auch die zentralen Bereiche des Distanzsensors 9a beleuchtet werden. Eine Verwirklichung des unteren Spiegels 3 als Teilerschicht erlaubt weiterhin Messungen auf Retroflektoren hoher Güte, welche am Messpunkt 8 angebracht sind, ohne dass der Messlichtstrahl aufgeweitet werden muss.

Um eine räumlich zentrierte Teilabschattung 12 zu erzielen, ist es vorteilhaft, die räumliche Ausdehnung des Primärspiegels 3 im Vergleich zur räumlichen Ausdehnung des optischen Gesamtkörpers zu beschränken. Vorteilhafterweise ist die Spiegelausdehnung L2 geringer als die Gesamtausdehnung L3. Der Primärspiegel 3 kann auch in einer Orthogonalrichtung, die orthogonal zur Richtung der Gesamtausdehnung L3 sowie zur optischen Achse ist, eine geringere Ausdehnung als der optische Gesamtkörper aufweisen.

Alternativ kann der Primärspiegel 3 in Orthogonalrichtung eine ähnliche Ausdehnung wie der optische Gesamtkörper aufweisen. In diesem Fall liegt Teilabschattung in einem Bereich vor, der in Orthogonalrichtung grösser ist als in Richtung der Gesamtausdehnung L3.

Eine Teilabschattung 12 liegt daher nicht im Bereich der ganzen Eintrittspupille 11 vor, sondern nur in einem kleineren Bereich, wobei der Primärspiegel 3 die Ausdehnung des Teilabschattungsbereichs beeinflusst. Vorteilhafterweise erreicht dadurch mehr Licht die lichtbrechende Komponente.

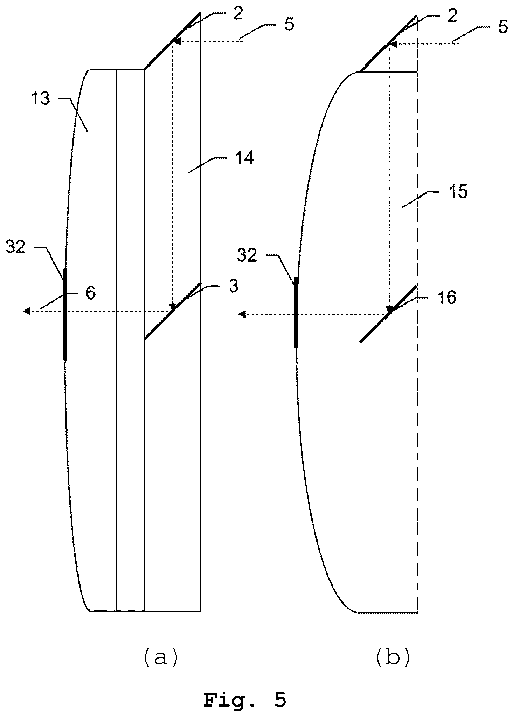

Figur 5 zeigt alternative Ausführungsformen einer erfindungsgemässen Vorrichtung. Figur 5a zeigt eine Anordnung, bei der die lichtbrechende Komponente 13 mit dem optischen Gesamtkörper 14 fest verbunden ist. Ein Vorteil dieser Anordnung ist eine erhöhte mechanische Stabilität. Die lichtbrechende Komponente kann insbesondere kleiner sein als der optische Gesamtkörper. Die lichtbrechende Komponente 13 ist auf der den optischen Gesamtkörper 14 nicht berührenden Oberfläche um die optische Achse herum lokal plan 32.

Figur 5b wiederum zeigt eine Ausführungsform, bei der der optische Gesamtkörper 15 so geformt ist, dass er gleichzeitig zur Einspiegelung eines Messlichtstrahls 5 und zur optischen Abbildung verwendet werden kann. Der optische Gesamtkörper 15 wird damit sowohl zur Einspiegelung als auch als lichtbrechende Komponente verwendet. Der untere Spiegel 16 kann sowohl wie dargestellt ausgeführt sein, oder aber alternativ bis zur gekrümmten Oberfläche fortgeführt sein. Vorteile der in Figur 5b gezeigten Anordnung bestehen darin, dass nur ein Objekt für die Einspiegelung und die optische Abbildung vonnöten ist und dass die Verwirklichung in der gezeigten Form über eine hohe mechanische Stabilität verfügt.

Der optische Gesamtkörper 15 ist an seinem Scheitelpunkt lokal plan 32.

Figur 6 zeigt eine Ausführungsform zur Einspiegelung eines Messlichtstrahls 5 nach dem Stand der Technik. Über einen Spiegel 26 wird der einfallende Messlichtstrahl 5 in Richtung eines Prismas 17 umgelenkt, wobei das Prisma 17 auf einer lichtbrechenden Komponente 7 angebracht ist. Das Prisma 17 wird dabei zur Einspiegelung verwendet und lenkt den einfallenden Strahl so um, dass er kollinear zur optischen Achse der lichtbrechenden Komponente 7 ist.

Figur 7 zeigt eine weitere Ausführungsform zur Einspiegelung eines Messlichtstrahls 5 nach dem Stand der Technik. Über einen Spiegel 26 wird der einfallende Messlichtstrahl 5 in Richtung eines Spiegelträgers 18 umgelenkt. Der Spiegelträger 18 wird über eine Mechanik 19 mit der lichtbrechenden Komponente 7 in Bezug gebracht. Ein vom Spiegel 26 umgelenkter einfallender Messlichtstrahl 5 wird vom Spiegelträger 18 in Richtung der optischen Achse der lichtbrechenden Komponente 7 umgelenkt.

Figur 8 zeigt eine weitere Ausführungsform zur Einspiegelung eines Messlichtstrahls 5 nach dem Stand der Technik. Über einen Spiegel 26 wird der einfallende Messlichtstrahl 5 in Richtung einer Teilerplatte 20 umgelenkt. Die Teilerplatte 20 wird so vor einer lichtbrechenden Komponente 7 positioniert, dass der von der Teilerplatte 20 reflektierte Messlichtstrahl auf der optischen Achse der lichtbrechenden Komponente 7 liegt.

Figur 9 zeigt eine weitere Ausführungsform zur Einspiegelung eines Messlichtstrahls nach dem Stand der Technik. Eine einen Messlichtstrahl erzeugende Quelle 21 projiziert den Messlichtstrahl in Richtung eines Teilerwürfels 22, welcher den Messlichtstrahl teilweise so umlenkt, dass der Messlichtstrahl auf der optischen Achse eines Hauptobjektivs 24 liegt. Der ausfallende Messlichtstrahl 25 wird dann auf einen Messpunkt gelenkt. Ein Bildsensor 23 zeichnet dann die vom Zielobjekt reflektierten und vom Hauptobjektiv 24 gebündelten Lichtstrahlen auf.

Figur 10a zeigt eine weitere Ausführungsform einer erfindungsgemässen Vorrichtung zur Einspiegelung eines Messlichtstrahls in Form eines optischen Gesamtkörpers aufweisend einen optischen Körper 1 und einen optischen Teilkörper 4. Der optische Körper 1 und der optische Teilkörper 4 sind in Figur 10a räumlich voneinander getrennt dargestellt, wobei der optische Körper 1 und der optische Teilkörper 4 als Teil des optischen Gesamtkörpers verbunden sind und daher kein Abstand zwischen ihnen vorliegt. Zwei Spiegel 2,3 zum Umlenken eines Messlichtstrahls sind in den optischen Körper 1 eingearbeitet. Der optische Körper 1 und der optische Teilkörper 4 sind an einer Kittfläche 36 miteinander verbunden, welche in einer Ebene parallel zur optischen Achse der lichtbrechenden Komponente (nicht gezeigt) liegt.

Figur 10b zeigt eine weitere Ausführungsform einer erfindungsgemässen Vorrichtung zur Einspiegelung eines Messlichtstrahls in Form eines optischen Gesamtkörpers aufweisend einen optischen Körper 1 und einen optischen Teilkörper 4. Ein Spiegel 3 ist an einer Randfläche des optischen Körpers 1 angebracht, wobei die Randfläche in einer Auslassung liegt. Die Auslassung kann z.B. mittels Ätzen erzeugt werden. Der optische Körper 1 und der optische Teilkörper 4 sind an einer Kittfläche 36 miteinander fest verbunden, die wie in Figur 10a beschrieben parallel zur optischen Achse der lichtbrechenden Komponente (nicht gezeigt) liegt.

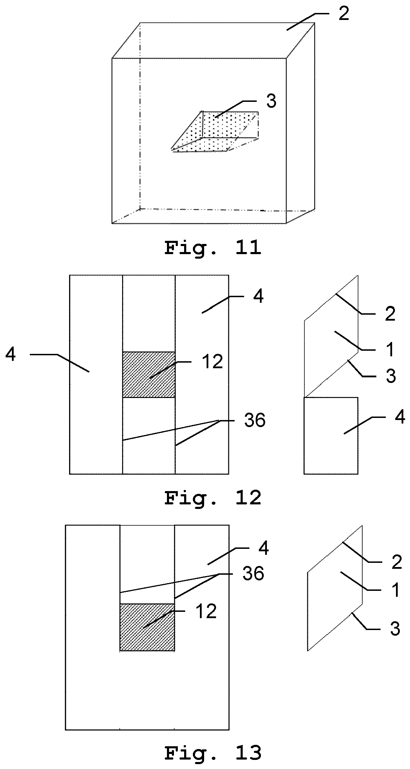

Figur 11 zeigt eine weitere Ausführungsform einer erfindungsgemässen Vorrichtung zur Einspiegelung eines Messlichtstrahls in Form eines optischen Gesamtkörpers. Der optische Gesamtkörper weist zwei Spiegel 2,3 auf, wobei der untere Spiegel 3 an einer Randfläche einer keilförmigen Auslassung angebracht ist.

Figur 12 und 13 zeigen weitere Ausführungsformen einer erfindungsgemässen Vorrichtung zur Einspiegelung eines Messlichtstrahls in Form eines optischen Gesamtkörpers aufweisend einen optischen Körper 1 und drei optische Teilkörper 4 (in Figur 12) bzw. einen optischen Teilkörper 4 (in Figur 13). In Figur 12 und 13 wird jeweils in den linken Teilbildern der Figuren eine Draufsicht in Richtung der optischen Achse gezeigt, und in den rechten Teilbildern jeweils eine dazu orthogonale Draufsicht auf die in den linken Teilbildern gezeigten Mittelstücke. In Figur 12 und 13 werden Teilabschattungsbereiche 12 schematisch dargestellt, die durch den unteren Spiegel 3 bewirkt werden. Die bzw. der optische Teilkörper 4 sind an Kittflächen 36 mit dem optischen Körper 1 verbunden, die parallel zur optischen Achse (nicht gezeigt) sind.

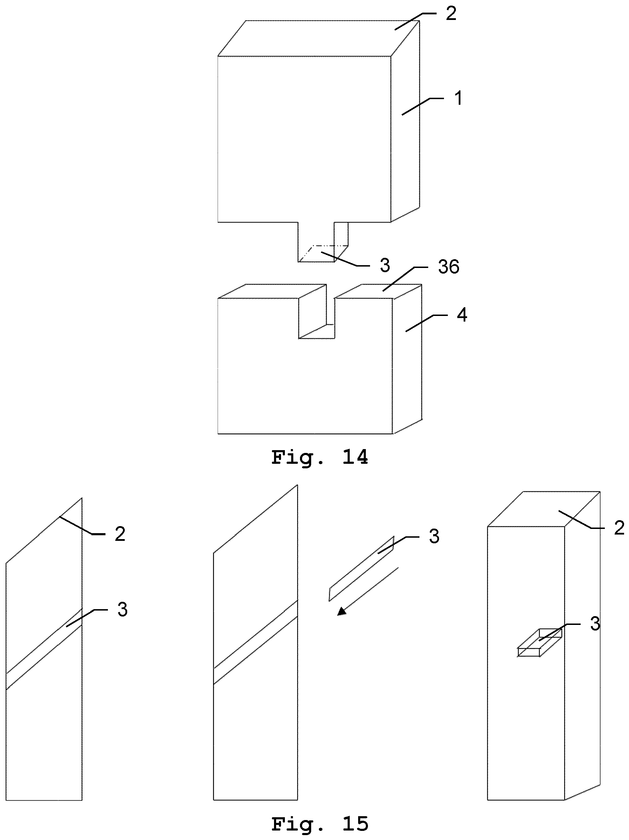

Figur 14 zeigt eine weitere Ausführungsform einer erfindungsgemässen Vorrichtung zur Einspiegelung eines Messlichtstrahls, die der in Figur 11 gezeigten Ausführungsform ähnelt. Der untere Spiegel 3 liegt nicht in einer Auslassung des optischen Körpers wie in Figur 11 gezeigt, sondern an einer Randfläche eines aus dem optischen Körper 1 herausragenden Teils des optischen Körpers 1. Der optische Körper 1 und der optische Teilkörper 4 können an einer Kittfläche 36 miteinander verbunden werden, die parallel zur optischen Achse (nicht gezeigt) ist.

Figur 15 ähnelt Figur 1, wobei der untere Spiegel 3 im Unterschied zu Figur 1 eine räumliche Ausdehnung aufweist. Die mittlere Abbildung in Figur 15 zeigt, dass der untere Spiegel 3 in eine Auslassung geschoben werden kann. Wie in der rechten Abbildung in Figur 15 gezeigt, kann der so eingefügte untere Spiegel 3 eine begrenzte Ausdehnung in der Breite aufweisen.

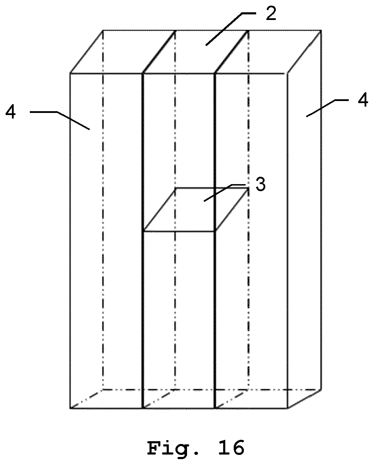

Die in Figur 16 gezeigte Ausführungsform ähnelt der in Figur 12 gezeigten Ausführungsform, wobei in Figur 16 der unter dem unteren Spiegel 3 liegende Teilkörper bis zum unteren Spiegel 3 reicht, wohingegen sich in Figur 12 zwischen dem unteren Spiegel 3 und dem darunter liegenden Teilkörper ein Luftspalt befindet.

Es versteht sich, dass diese dargestellten Figuren nur mögliche Ausführungsbeispiele schematisch darstellen. Die verschiedenen Ansätze können ebenso miteinander sowie mit Verfahren und Geräten des Standes der Technik kombiniert werden.

## Patentansprüche

1. Koordinatenmessgerät ausgeführt als Theodolit, Tachymeter oder Totalstation, mit einem Messteleskop mit einer Vorrichtung zur Einspiegelung eines auf ein Zielobjekt projizierbaren Messlichtstrahls, wobei die Vorrichtung aufweist
• eine lichtbrechende Komponente (7,13,15) mit einer optischen Achse, wobei die lichtbrechende Komponente (7,13,15) als Objektiv des Messteleskops dient,
• mindestens zwei Spiegel (2,3,16) zum Umlenken des Messlichtstrahls und
• einen optischen Gesamtkörper (14,15,27) aus mindestens einem optisch wirksamen Material,
**dadurch gekennzeichnet, dass**
der optische Gesamtkörper (14,15,27) so beschaffen ist, dass die mindestens zwei Spiegel (2,3,16) innerhalb oder am Rande als Teil des optischen Gesamtkörpers (14,15,27) derart angebracht sind, dass der in den optischen Gesamtkörper (14,15,27) einfallende Messlichtstrahl beim Austritt aus dem optischen Gesamtkörper (14,15,27) so parallel versetzt zum einfallenden Messlichtstrahl (5) ist, dass der austretende Messlichtstrahl (6) auf der optischen Achse der lichtbrechenden Komponente (7,13,15) der Vorrichtung liegt und in dieser Form auf das Zielobjekt projiziert wird.

2. Koordinatenmessgerät nach Anspruch 1,
**dadurch gekennzeichnet, dass**
ein erster (3,16) der mindestens zwei Spiegel von der optischen Achse geschnitten wird, und dass der erste (3,16) Spiegel, auf eine Ebene orthogonal zur optischen Achse projiziert, eine Spiegelausdehnung (L2) aufweist, und dass der optische Gesamtkörper, auf die Ebene orthogonal zur optischen Achse projiziert, eine Gesamtausdehnung (L3) aufweist, wobei das Verhältnis von L2 zu L3 kleiner ist als 0.5, und insbesondere kleiner als 0.3, und vorteilhafterweise kleiner als 0.1.

3. Koordinatenmessgerät nach Anspruch 1 oder 2,
**dadurch gekennzeichnet, dass**
der ganze Strahlgang der lichtbrechenden Komponente (7,14,15) den optischen Gesamtkörper (14,15,27) durchquert, und/oder dass die Gesamtausdehnung (L3) mindestens so gross ist wie eine Objektivausdehnung (L1), wobei die lichtbrechende Komponente (7,13,15), auf die Ebene orthogonal zur optischen Achse projiziert, die Objektivausdehnung (L1) aufweist.

4. Koordinatenmessgerät nach einem der vorherigen Ansprüche,
**dadurch gekennzeichnet, dass**
der optische Gesamtkörper (27) als Verbund aus mindestens zwei optischen Körpern oder als Verbund aus mindestens einem optischen Körper (1) und mindestens einem optischen Teilkörper (4) vorliegt, wobei die zwei der mindestens zwei Spiegel (2,3) nur an den Randflächen von mindestens einem der optischen Körper angebracht sind.

5. Koordinatenmessgerät nach Anspruch 4,
**dadurch gekennzeichnet, dass**
die mindestens zwei optischen Körper oder der mindestens eine optische Körper (1) und der mindestens eine optische Teilkörper (4) an einer Kittfläche (36) miteinander verbunden sind, wobei die Kittfläche (36) parallel zur optischen Achse ist.

6. Koordinatenmessgerät nach Anspruch 4 oder 5,
**dadurch gekennzeichnet, dass**
der optische Gesamtkörper (27) aus genau einem optischen Körper (1) und genau einem optischen Teilkörper (4) zusammengesetzt ist, und/oder der optische Körper (1), welchen der optische Gesamtkörper (27) aufweist, in planparalleler und prismatischer Form ausgeführt ist, und der optische Teilkörper ebenfalls in planparalleler und prismatischer Form vorliegt.

7. Koordinatenmessgerät nach einem der vorherigen Ansprüche,
**dadurch gekennzeichnet, dass**
mindestens einer der mindestens zwei Spiegel (3,16) als Teilerschicht verwirklicht ist, so dass im Zentrum eines Distanzsensors (9a) zur Detektion des vom Zielobjekt reflektierten Messlichtstrahls, der orthogonal zur optischen Achse der lichtbrechenden Komponente (7,13,15) positioniert ist und dessen Sensormittelpunkt von der optischen Achse geschnitten wird, lediglich eine Teilabschattung (12) vorliegt.

8. Koordinatenmessgerät nach einem der vorherigen Ansprüche,
**dadurch gekennzeichnet, dass**
der optische Gesamtkörper (15) die lichtbrechende Komponente aufweist, so dass sowohl der Messlichtstrahlversatz als auch eine optische Abbildung vom optischen Gesamtkörper durchgeführt werden.

9. Koordinatenmessgerät nach Anspruch 7,
**dadurch gekennzeichnet, dass**
die Teilerschicht so eingestellt wird, dass Nahfeldmessungen ermöglicht werden, insbesondere durch ein dichroitisches Filter als Teilerschicht.

10. Koordinatenmessgerät nach Anspruch 7 oder 9,
**dadurch gekennzeichnet, dass**
die Teilerschicht so eingestellt wird, dass sie selektiv einen Teiler für die Wellenlänge der verwendeten Messlichtquelle, insbesondere für eine Laserquelle im nahen Infrarotbereich, darstellt, und bei anderen Wellenlängen durchlässig ist.

11. Koordinatenmessgerät nach einem der vorherigen Ansprüche,
**dadurch gekennzeichnet, dass**
zwei parallele Oberflächen, an denen zwei der mindestens zwei Spiegel angebracht sind, von dem mindestens einen ersten optischen Körper einen gleichen Winkel (34,35) zur Einfallsrichtung des Messlichtstrahls bilden, wobei der Winkel insbesondere 43 Grad beträgt.

12. Koordinatenmessgerät nach einem der vorherigen Ansprüche,
**dadurch gekennzeichnet, dass**
sowohl der optische Körper als auch der optische Teilkörper als Glaskörper, und/oder als Kunststoffkörper, insbesondere aus Polycarbonat oder Polymethylmethacrylat oder einem Cycloolefin-Copolymer oder einem Cycloolefin-Polymer bestehend, und/oder als Keramikkörper, insbesondere aus Saphir oder Alon bestehend, ausgeführt sind, und/oder die lichtbrechende Komponente (7,13) als diffraktives optisches Element ausgebildet ist, insbesondere als Kompositreplikat auf Glas.

## Claims

1. Coordinate measuring device embodied as a theodolite, tachymeter or total station, with a measuring telescope with an apparatus for inserting a measurement light beam which can be projected onto a target object, the apparatus comprising
• a light-refracting component (7,13,15) having an optical axis, wherein the light-refracting component (7,13,15) serves as the objective lens of the measuring telescope,
• at least two mirrors (2,3,16) for deflecting the measurement light beam, and
• an optical overall body (14,15,27) consisting of at least one optically effective material,
**characterized in that**
the optical overall body (14,15,27) is configured in such a way that the at least two mirrors (2,3,16) are fitted inside or at the edge as a part of the optical overall body (14,15,27), in such a way that the measurement light beam entering the optical overall body (14,15,27) is offset parallel to the incident measurement light beam (5) when emerging from the optical overall body (14,15,27), so that the emerging measurement light beam (6) lies on the optical axis of the light-refracting component (7,13,15) of the apparatus and is projected in this form onto the target object.

2. Coordinate measuring device according to claim 1, **characterized in that**
a first (3,16) of the at least two mirrors is intersected by the optical axis, and **in that** the first mirror (3,16) has a mirror extent (L2) when projected onto a plane orthogonal to the optical axis, and **in that** the optical overall body has an overall extent (L3) when projected onto the plane orthogonal to the optical axis, the ratio of L2 to L3 being less than 0.5 and in particular less than 0.3, and preferably less than 0.1.

3. Coordinate measuring device according to claim 1 or 2,
**characterized in that**
the entire beam path of the light-refracting component (7,14,15) crosses the optical overall body (14,15,27), and/or **in that** the overall extent (L3) is at least as great as an objective lens extent (L1), the light-refracting component (7,13,15) having the objective lens extent (L1) when projected onto the plane orthogonal to the optical axis.

4. Coordinate measuring device according to any one of the preceding claims,
**characterized in that**
the optical overall body (27) is in the form of a compound of at least two optical bodies or as a compound of at least one optical body (1) and at least one optical partial body (4), the two of the at least two mirrors (2,3) being fitted only on the edge surfaces of at least one of the optical bodies.

5. Coordinate measuring device according to claim 4,
**characterized in that**
the at least two optical bodies or the at least one optical body (1) and the at least one optical partial body (4) are connected to one another at a cement surface (36), the cement surface (36) being parallel to the optical axis.

6. Coordinate measuring device according to claim 4 or 5,
**characterized in that**
the optical overall body (27) is composed of precisely one optical body (1) and precisely one optical partial body (4), and/or the optical body (1) which the optical overall body (27) comprises is configured in a plane-parallel and prismatic shape, and the optical partial body is likewise in a plane-parallel and prismatic shape.

7. Coordinate measuring device according to any one of the preceding claims,
**characterized in that**
at least one of the at least two mirrors (3,16) is implemented as a splitter layer, so that there is only partial shadowing (12) at the center of a distance sensor (9a) for detecting the measurement light beam reflected by the target object, which distance sensor is positioned orthogonally with respect to the optical axis of the light-refracting component (7,13,15) and the sensor midpoint of which is intersected by the optical axis.

8. Coordinate measuring device according to any one of the preceding claims,
**characterized in that**
the optical overall body (15) comprises the light-refracting component, so that both the measurement light beam offset and optical imaging are carried out by the optical overall body.

9. Coordinate measuring device according to claim 7,
**characterized in that**
the splitter layer is adjusted in such a way that near-field measurements are made possible, in particular by a dichroic filter as the splitter layer.

10. Coordinate measuring device according to claim 7 or 9,
**characterized in that**
the splitter layer is adjusted in such a way that it selectively constitutes a splitter for the wavelength of the measurement light source used, in particular for a laser source in the near infrared range, and is transmissive at other wavelengths.

11. Coordinate measuring device according to any one of the preceding claims,
**characterized in that**
two parallel surfaces, on which two of the at least two mirrors are attached, of the at least one first optical body form an equal angle (34,35) with respect to the incidence direction of the measurement light beam, the angle being in particular 43 degrees.

12. Coordinate measuring device according to any one of the preceding claims,
**characterized in that**
both the optical body and the optical partial body are configured as a glass body and/or as a plastic body, in particular consisting of polycarbonate or polymethyl methacrylate or a cyclic olefin copolymer or a cyclic olefin polymer, and/or as a ceramic body, in particular consisting of sapphire or AlON, and/or the light-refracting component (7,13) is formed as a diffractive optical element, in particular as a composite replicate on glass.

## Revendications

1. Appareil de mesure de coordonnées réalisé comme théodolite, tachymètre ou station totale, doté d'un télescope de mesure avec un dispositif destiné à projeter par réflexion un faisceau lumineux de mesure projetable sur un objet cible, dans lequel le dispositif comporte
• un composant réfringent (7, 13, 15) doté d'un axe optique, dans lequel le composant réfringent (7, 13, 15) sert d'objectif au télescope de mesure,
• au moins deux miroirs (2, 3, 16) destinés à dévier le faisceau lumineux de mesure et
• un corps d'ensemble optique (14, 15, 27) constitué d'au moins une matière optiquement efficace,
**caractérisé en ce que**
le corps d'ensemble optique (14, 15, 27) est conçu de sorte que les au moins deux miroirs (2, 3, 16) sont montés à l'intérieur ou au bord comme partie du corps d'ensemble optique (14, 15, 27) de telle sorte que le faisceau lumineux de mesure incident dans le corps d'ensemble optique (14, 15, 27) est, lors de la sortie du corps d'ensemble optique (14, 15, 27), décalé en parallèle par rapport au faisceau lumineux de mesure incident (5) de sorte que le faisceau lumineux de mesure sortant (6) se trouve sur l'axe optique du composant réfringent (7, 13, 15) et est projeté sur l'objet cible sous cette forme.

2. Appareil de mesure de coordonnées selon la revendication 1,
**caractérisé en ce**
**qu'**un premier (3, 16) des au moins deux miroirs est coupé par l'axe optique, et **en ce que** le premier (3, 16) miroir, en projection sur un plan orthogonal à l'axe optique, comporte une étendue de miroir (L2), et **en ce que** le corps d'ensemble optique, en projection sur le plan orthogonal à l'axe optique, comporte une étendue d'ensemble (L3), dans lequel le rapport de L2 à L3 est inférieur à 0,5 et en particulier inférieur à 0,3 et avantageusement inférieur à 0,1.

3. Appareil de mesure de coordonnées selon la revendication 1 ou 2,
**caractérisé en ce que**
la totalité du chemin optique du composant réfringent (7, 14, 15) traverse le corps d'ensemble optique (14, 15, 27), et/ou **en ce que** l'étendue d'ensemble (L3) est au moins aussi grande qu'une étendue d'objectif (L1), dans lequel le composant réfringent (7, 13, 15), en projection sur le plan orthogonal à l'axe optique, comporte l'étendue d'objectif (L1).

4. Appareil de mesure de coordonnées selon l'une des revendications précédentes,
**caractérisé en ce que**
le corps d'ensemble optique (27) existe comme association constituée de deux corps optiques ou comme association constituée d'au moins un corps optique (1) et d'au moins un corps optique partiel (4), dans lequel les deux des au moins deux miroirs (2, 3) sont montés uniquement sur les surfaces de bord d'au moins un des corps optiques.

5. Appareil de mesure de coordonnées selon la revendication 4,
**caractérisé en ce que**
les au moins deux corps optiques ou l'au moins un corps optique (1) et l'au moins un corps optique partiel (4) sont reliés l'un à l'autre sur une surface collée (36), dans lequel la surface collée (36) est parallèle à l'axe optique.

6. Appareil de mesure de coordonnées selon la revendication 4 ou 5,
**caractérisé en ce que**
le corps d'ensemble optique (27) consiste en exactement un corps optique (1) et exactement un corps optique partiel (4), et/ou le corps optique (1) que le corps d'ensemble optique (27) comporte est réalisé sous forme prismatique et à faces planes et parallèles, et le corps optique partiel existe également sous forme prismatique et à faces planes et parallèles.

7. Appareil de mesure de coordonnées selon l'une des revendications précédentes,
**caractérisé en ce**
**qu'**au moins un des au moins deux miroirs (3, 16) est réalisé comme couche de division, de sorte qu'il existe uniquement un ombrage partiel (12) au centre d'un capteur de distance (9a) destiné à détecter le faisceau lumineux de mesure réfléchi par l'objet cible, positionné comme orthogonal à l'axe optique du composant réfringent (7, 13, 15) et dont le centre du capteur est coupé par l'axe optique.

8. Appareil de mesure de coordonnées selon l'une des revendications précédentes,
**caractérisé en ce que**
le corps d'ensemble optique (15) comporte le composant réfringent de sorte que le décalage du faisceau lumineux de mesure ainsi qu'une imagerie optique sont effectués par le corps d'ensemble optique (15).

9. Appareil de mesure de coordonnées selon la revendication 7,
**caractérisé en ce que**
la couche de division est obtenue de façon à permettre des mesures de champ proche, en particulier par le biais d'un filtre dichroïque comme couche de division.

10. Appareil de mesure de coordonnées selon la revendication 7 ou 9,
**caractérisé en ce que**
la couche de division est obtenue de façon représente sélectivement un diviseur pour les longueurs d'onde de la source lumineuse de mesure utilisée, en particulier pour une source laser dans la gamme de l'infrarouge proche, et est transparente dans le cas des autres longueurs d'onde.

11. Appareil de mesure de coordonnées selon l'une des revendications précédentes,
**caractérisé en ce que**
deux surfaces parallèles, sur lesquelles sont montés deux des au moins deux miroirs, de l'au moins un premier corps optique forment un même angle (34, 35) par rapport à la direction d'incidence du faisceau lumineux de mesure, dans lequel l'angle vaut en particulier 43°.

12. Appareil de mesure de coordonnées selon l'une des revendications précédentes,
**caractérisé en ce que**
aussi bien le corps optique que le corps optique partiel sont réalisés comme corps de verre, et/ou comme corps plastique, en particulier constitué de polycarbonate ou de polyméthacrylate de méthyle ou un copolymère de cyclooléfine ou un polymère de cyclooléfine, et/ou comme corps céramique, en particulier constitué de saphir ou d'AlON, et/ou le composant réfringent (7, 13) est configuré comme élément optique de diffraction, en particulier comme réplique composite.
